# EUROPEAN PATENT APPLICATION

(11) **EP 0 713 845 A2**
(43) Date of publication of application: **29.05.1996**
(21) Application number: 95203202.7
(22) Date of filing: 22.11.1995
(51) Int. Cl.: C04B 35/622, C04B 14/04

(54) **Composite articles**

(30) Priority: 25.11.1994 GB 9423779
(71) Applicant: Tenmat Limited, Manchester M17 1RA (GB)
(72) Inventor: Lloyd, Brian Thomas, Weaverham, Cheshire CW8 3PT (GB)
(74) Representative: Gibson, George Kevin

(57) **Abstract**

A composite article is manufactured by employing known vacuum forming techniques with a dispersion including as the major solid constituent thereof an anhydrous crystalline mineral of acicular form, such as Wollastonite. At least 60%, and preferably 85%, by weight of the solid constituents of the dispersion comprise such a mineral. The mineral has an aspect ratio of at least 10 to 1, and preferably 20 to 1. The dispersion also includes a binder system, which may include starch, and/or colloidal silicon, and/or colloidal alumina, and/or latex.

## Description

This invention relates to the manufacture of composite articles, especially shaped products manufactured by employing a vacuum forming process step.

In known process steps used to vacuum form shapes, a dilute dispersion of materials, with typically less than 5% by weight solids, is prepared from a furnish whose major constituent is an inorganic vitreous fibre such as mineral wool, glass wool or ceramic fibre having an aspect ratio of, say, 200 to 1, and may have the addition of fillers such as ball clay, china clay, mullites, or alumina to improve the hardness and temperature resistance of the product. The dispersion also contains a binder system, having an inorganic binder such as colloidal silica or colloidal alumina, and/or an organic binder such as starch. The dilute aqueous suspension is dewatered on a filter element typically constructed from metal gauze of such a mesh size as to allow the passage of water, yet retain the fibres and fillers on the surface. This dewatering process is facilitated by the application of a vacuum to the reverse side of the mesh. The metal mesh can be so formed that the resulting build up on the surface forms the desired shape, for example, a flat sheet, or a complex, three dimensional shape such as a tube, or a cone, or a shape with an indented surface.

The vacuum forming head can be constructed so that it can be withdrawn from the suspension after sufficient build up of the fibres and fillers on the mesh has been achieved, and the resulting shape is released from the wire mesh by air pressure. Subsequently the vacuum formed shape is placed in a drying oven until the excess moisture has been removed.

It is an object of the present invention to provide a novel and advantageous method of manufacturing a composite article at least not including mineral fibres or ceramic fibres as the major constituent, the article to be capable of being subjected to temperatures of at least 1000°C, and which article has the strength conventional for that of an article substantially wholly of mineral fibres or ceramic fibres.

According to the present invention a method of manufacturing a composite article characterised by employing a vacuum forming process step with a dispersion including as the major solid constituent thereof an anhydrous crystalline mineral of acicular form, together with a binder system.

The mineral may be of calcium silicate, and may be Wollastonite.

The aspect ratio of the acicular material may be at least 10 to 1, and preferably is greater than 20 to 1.

The solid constituents of the dispersion may have at least 60%, and preferably at least 85%, by weight of the mineral.

The dispersion also may include mineral fibres or ceramic fibres.

The mineral may be of calcium silicate, and may be Wollastonite. Fillers such as Kaolinitic clay, or china clay, or mullites, or alumina may be added to the dispersion.

Wollastonite is known as comprising a low-shrinkage filler in composite articles, less than 50% by weight of the article comprising Wollastonite.

The binder system included in the dispersion may have any appropriate form, say, known binder systems comprising or including starch, and/or colloidal silica, and/or colloidal alumina, and/or latex.

In manufacturing vacuum formed shapes as described above, and using a composition in accordance with the present invention it is possible to produce a low density heat resisting material, and offers excellent thermal insulation properties and resistance to molten metals.

The present invention will now be described by reference to the following example.

### EXAMPLE

A dilute dispersion was prepared with the solid constituents comprising:
88% by weight Wollastonite
6% by weight Starch
6% by weight Colloidal Silica
A composite article was manufactured by employing known vacuum forming techniques with the dispersion.

The properties of a typical article were

| Technical Properties | |
|---|---|
| Density kg/m³ | 350 |
| Continuous use temperature °C | 1150 |
| Moisture content % | 1.0 |
| Tensile strength MPa | 1.3 |
| Flexural strength MPa | 1.2 |

| Shrinkage % | |
|---|---|
| 4 hours at 1000°C | |
| Linear | 0.7 |
| Thickness | 2.4 |

| 24 hours at 1000°C | |
|---|---|
| Linear | 1.0 |
| Thickness | 2.8 |

| Weight loss % | |
|---|---|
| 24 hours at 1000°C | 9.4 |

| Thermal conductivity W/mk | |
|---|---|
| Mean Temp. °C | |
| 200 | 0.075 |
| 300 | 0.085 |
| 400 | 0.100 |
| 500 | 0.120 |

The major solid constituent of the dispersion may be any anhydrous crystalline and acicular form of calcium silicate, or any anhydrous crystalline mineral of acicular form. The mineral desirably has an aspect ratio of at least 10 to 1, and preferably 20 to 1. The mineral also is at least 60%, and preferably 85%, by weight of the solid constituents of the dispersion.

The binder system may include only starch, or colloidal silica, or colloidal alumina, or latex, or any combination thereof.

The dispersion may include at least one filler, for example, ball clay, china clay, mullites, or alumina.

The dispersion also may include mineral fibres or ceramic fibres.

## Claims

1. A method of manufacturing a composite article characterised by employing a vacuum forming process step with a dispersion including as the major solid constituent thereof an anhydrous crystalline mineral of acicular form, together with a binder system.

2. A method as claimed in claim 1 characterised in that the anhydrous crystalline mineral is of calcium silicate.

3. A method as claimed in claim 2 characterised in that the mineral is Wollastonite.

4. A method as claimed in any one of the preceding claims characterised in that the aspect ratio of the acicular material is at least 10 to 1.

5. A method as claimed in claim 4 characterised in that the aspect ratio of the acicular material is at least 20 to 1.

6. A method as claimed in any one of the preceding claims characterised in that the solid constituents of the dispersion has at least 60% by weight of the anhydrous crystalline mineral of acicular form.

7. A method as claimed in claim 6 characterised in that the solid constituents of the dispersion has at least 85% by weight of the anhydrous crystalline mineral of acicular form.

8. A method as claimed in any one of the preceding claims characterised in that the dispersion also includes mineral fibres or ceramic fibres.

9. A method as claimed in any one of the preceding claims charactersed in that the dispersion includes at least one filler.

10. A method as claimed in any one of the preceding claims characterised in that the binder system at least includes starch, and/or colloidal silica, and/or colloidal alumina, and/or latex.
